# FASCICULE DE BREVET EUROPEEN

(11) **EP 0 647 518 B1**
(45) Date de publication et mention de la délivrance du brevet: **29.07.1998**
(21) Numéro de dépôt: 94402064.3
(22) Date de dépôt: 15.09.1994
(51) Int. Cl.: B29C 53/82

(54) **Dispositif et méthode de fabrication en série de pièces en résine renforcée par des fibres**
Vorrichtung und Verfahren zur seriellen Herstellung von faserverstärkten Harzteilen
Apparatus and method for series production of fibre reinforced resin parts

(30) Priorité: 08.10.1993 FR 9312104
(43) Date de publication de la demande: 12.04.1995
(73) Titulaire: INSTITUT FRANCAIS DU PETROLE, 92502 Rueil-Malmaison (FR)
(72) Inventeur: Grosjean, François, F-78000 Versailles (FR); Huvey, Michel, F-78380 Bougival (FR); Dewimille, Bernard, F-91100 Corbeil Essonne (FR)

(56) Documents cités:
- WO-A-88/07927
- DATABASE WPI Week 8117, Derwent Publications Ltd., London, GB; AN 81-30025D & JP-A-56 024 123 (SHOWA ELEC WIRE) 7 Mars 1981
- PATENT ABSTRACTS OF JAPAN vol. 10, no. 238 (M-508) (2294) 16 Août 1986 & JP-A-61 069 439 (NIKKISO) 4 Octobre 1986

## Description

La présente invention concerne une méthode et un dispositif pour fabriquer des pièces en résine polymérisable renforcée par des fibres. Le dispositif comporte des moyens de moulage adaptés à la fabrication d'une série de pièces.

On connaît par les documents US-A-4445957, US-A-3873399 et US-A-4440593 une méthode et un appareil pour fabriquer des pièces en résine renforcée par des fibres, mais ils concernent la technique de pultrusion dans laquelle les moyens de moulage associés ne permettent pas de grandes cadences de fabrication.

Le document WO-A-88 07927 décrit une méthode et un appareil pour fabriquer des pièces composites par enroulement des fibres dans un mandrin, comme définis dans les preambules des revendications 1 et 6.

Ainsi, la présente invention concerne une méthode de fabrication de pièce en résine et fibres de renfort, ladite pièce comporte une dimension principale allongée et des sections perpendiculaires à ladite dimension principale ayant une surface sensiblement constante. La méthode comporte les étapes suivantes :
- on fabrique des moyens de moulage comportant une pluralité de formes femelles correspondant à une empreinte d'une pièce,
- lesdites formes sont disposées les unes à la suite des autres sensiblement en hélice, de façon à ce que lesdites empreintes constituent une gorge sensiblement continue,
- on remplit ladite gorge par enroulement de fibres enrobées de résine polymérisable en entraînant en rotation lesdits moyens de moulage autour de l'axe de l'hélice.

Selon la méthode, après enroulement, les moyens de moulage peuvent être placés dans des moyens de polymérisation de la résine.

On peut placer sur les moyens de moulage des moyens de fermeture de ladite gorge.

On peut enrouler une bande de fermeture sur ladite gorge, autour des moyens de moulage, ledit enroulement s'effectuant pendant ou après remplissage de la gorge.

On peut remplir ladite gorge par couches successives de nappes de fibres de renfort enrobées.

La présente invention concerne également un dispositif de fabrication de pièce en résine et fibres de renfort, ladite pièce comporte une dimension principale allongée et des sections perpendiculaires à ladite dimension principale ayant une surface sensiblement constante. Le dispositif comporte des moyens de moulage comportant une pluralité de formes femelles correspondant à une empreinte d'une pièce. Les formes sont disposées les unes à la suite des autres sensiblement en hélice, de façon à ce que lesdites empreintes constituent une gorge sensiblement continue.

Le dispositif peut comporter des moyens de fermeture de la gorge.

Les moyens de fermeture peuvent comporter une bande enroulée hélicoïdalement sur les moules.

Les moyens de moulage peuvent comporter une pluralité de moules, chacun des moules comportant au moins une empreinte.

Le dispositif peut comporter des moyens de mise en rotation des moyens de moulage et des moyens de guidage des nappes de fibres enrobées.

Selon un mode de mise en oeuvre de l'invention, il est possible de découpler l'étape de moulage de l'étape de polymérisation. Ainsi, la cadence du garnissage des moules n'est plus limitée par la durée de l'opération de polymérisation.

La présente invention sera mieux comprise et ses avantages apparaîtront plus clairement à la description qui suit d'exemples particuliers, nullement limitatifs, illustrés par les figures ci-annexées, parmi lesquelles :
- La figure 1 représente une vue de coté des moyens de moulage par enroulement.
- La figure 2 montre en coupe la forme d'une empreinte d'un moule des moyens de moulage.
- Les figures 3 et 4 sont deux représentations de la section droite de la gorge à deux endroits différents.
- La figure 5 représente schématiquement l'opération de remplissage de la gorge par enroulement des fils de renfort et de la mise en place de moyens de fermeture de la gorge.

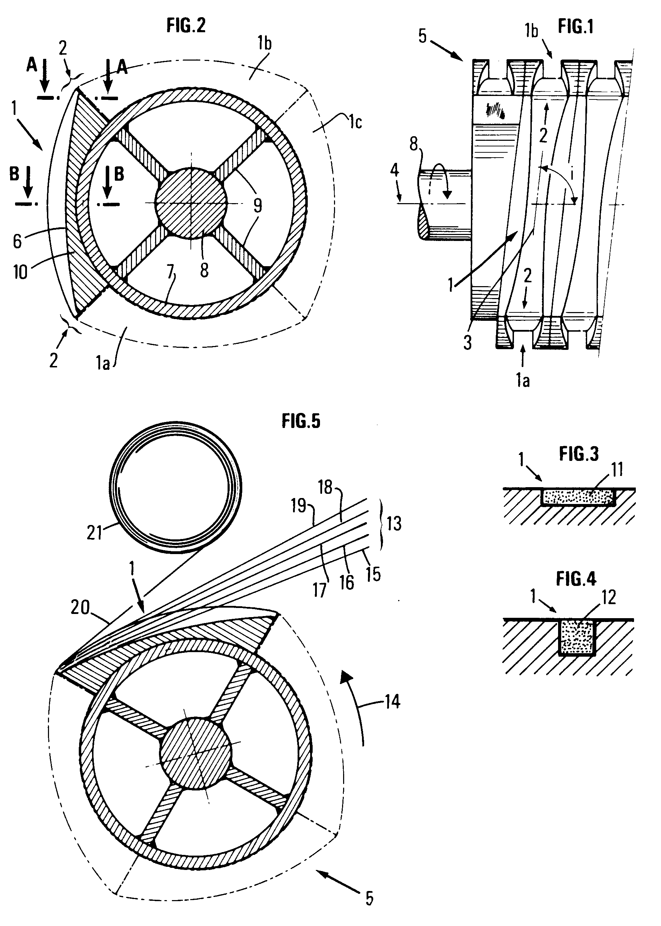

Sur la figure 1, la forme femelle 1 qui correspond à l'empreinte d'une pièce fabriquée en matériau composite, est intercalée entre une forme 1a et une forme 1b. Les formes peuvent être toutes identiques entre elles ou être de dimensions différentes. Les sections droites de ces formes 1, 1a et 1b sont sensiblement de surface égale de façon à ce que par enroulement de fils de renfort enrobés de résine, on puisse remplir sensiblement complètement les empreintes à partir d'un volume déterminé de fibres distribuées en continu par des têtes de guidage d'un dispositif d'enroulement.

Dans un autre mode de réalisation de l'invention il sera envisageable d'avoir des empreintes dont les sections droites ne sont pas de surface égale. En effet, on ne sortira pas du cadre de la présente invention si le remplissage de l'empreinte n'est pas total sur la totalité ou une partie du moule.

Les portions de gorges constituées par les formes femelles 1, 1a et 1b sont reliées entre elles par des canaux ou portions de gorge 2.

La direction principale de l'empreinte 1, représentée sensiblement par la direction 3, fait un angle i avec l'axe 4 confondu avec l'axe de rotation de l'ensemble du mandrin 5, lequel est constitué par la pluralité d'empreintes. Cet angle i est sensiblement égal à l'angle d'une hélice d'axe 4. Les formes 1, 1a et 1b sont disposés sur un mandrin 5 sensiblement en hélice de façon à ce que les différentes portions de gorge (2, 1a, 2, 1, 2, 1b...) reconstituent une gorge sensiblement continue. La gorge est dite sensiblement continue car dans certaine variante de l'invention, il est possible qu'au niveau des canaux intermédiaires 2 il y ait un espace transversal libre, par exemple pour permettre le passage d'une lame d'un outil de découpe.

Selon l'invention, on fabrique un mandrin 5 sur lequel une pluralité de formes du type 1 sont disposées les unes à la suite des autres de la même manière que les formes 1, 1a et 1b comme décrit plus haut. Ainsi, le mandrin de moulage par enroulement comporte au moins une gorge continue, équivalente à la forme générale d'un filet d'un pas de vis, mais de section droite variable. Un tel mandrin 5 permettra de former par enroulement en une seule opération autant de pièces que le mandrin comporte d'empreintes du type 1.

Les pièces moulées dans les empreintes 1 présenteront préférentiellement une certaine convexité relativement à l'extérieur du mandrin. La forme convexe des pièces peut résulter de leur forme géométrique comportant une courbure circulaire ou non, ou d'une succession de parties rectilignes, ou une combinaison des deux.

La figure 2 montre une réalisation d'un mandrin comportant des empreintes 1 dont le fond 6 est sensiblement cylindrique et dont la convexité est, dans le cas de cette réalisation, supérieure à celle du mandrin. L'avantage que représente une forme convexe est lié à la technique d'enroulement et sera explicité plus loin.

Sur la figure 2, une empreinte du type 1 est comprise dans un secteur d'arc de 45°. Donc, un tour complet de la gorge est constitué par quatre formes d'empreinte du type 1 : 1, 1a, 1b et 1c. Bien entendu cette disposition n'est pas limitative, le nombre d'empreintes par tour est notamment fonction des dimensions des pièces à fabriquer et de l'encombrement extérieur du mandrin de moulage. En effet, si les pièces sont de courte longueur et de faible courbure, pour la même cadence de fabrication, on pourra utiliser soit un mandrin de grand diamètre et de faible longueur, soit un mandrin de plus petit diamètre et de plus grande longueur.

Par contre, il faut noter que la forme de la gorge sensiblement continue ne devrait par comporter de partie concave par rapport aux têtes de distribution des fils enrobés, car le fond des parties concaves ne pourraient pas être entièrement remplies par les nappes de fils lors de l'enroulement. Cependant, le cas contraire peut exister dans la mesure où ces parties concaves ne correspondent pas à des sections des pièces à fabriquer, mais seulement à des parties intermédiaires situées entre des pièces consécutives, par exemple les canaux 2.

La figure 2 détaille une réalisation des moyens de moulage dans laquelle un cylindre 7 porte sur sa surface extérieure des éléments de moule 10. Chaque éléments de moule 10 comporte au moins une forme femelle du type 1 et des canaux intermédiaires 2 dans la continuité de la forme femelle. Cette conception modulaire permet de ne fabriquer qu'un seul modèle d'élément de moule pour constituer un mandrin de moulage comportant autant d'empreintes que l'on disposera de moules du type 10. La fixation des éléments de moules 10 sur le cylindre 7 peut être fait par tout moyen connu.

Bien entendu, dans le cas où plusieurs types de pièce sont moulés sur le même mandrin, les éléments de moules ayant des empreintes différentes seront adaptés à s'assembler entre eux.

Un arbre 8 est fixé au cylindre 7 par des entretoises 9. L'arbre 8 est adapté à la mise en rotation du mandrin 5 afin d'effectuer le bobinage.

On ne sortira pas du cadre de cette invention s'il est utilisé des moyens de support des éléments de moule 10 différents de ceux décrits plus haut, tels le cylindre 7, les entretoises 9 et l'arbre 8. En effet, l'adaptation d'un mode de fixation et de maintien d'une série d'éléments de moule 10 disposés selon l'invention, est à la portée de l'homme du métier connaissant la mécanique.

La figure 3 montre en coupe une section perpendiculaire à la direction principale de la gorge, sensiblement vers l'extrémité de l'empreinte de la pièce. La section 11 est ici rectangulaire de largeur importante par rapport à l'épaisseur.

La figure 4 montre en coupe une section 12 sensiblement au milieu de la pièce fabnquée. La surface de la section 12, sensiblement carrée, est égale à la surface de la section 11 illustrée sur la figure 3.

Les pièces réalisées selon cette structure pourrait faire office de lames de ressort de flexion, la partie centrale ayant une rigidité plus grande qu'aux extrémités. Bien entendu, la présente invention ne se limite pas à des pièces ayant pour section la géométrie de ces exemples, d'une manière équivalente, les sections peuvent semi-circulaires, parallélépipédiques, triangulaires, etc...

L'empreinte 1 est remplie par des fibres enrobées de résine, le nombre de nappes de fils de remplissage est déterminé pour que le volume de ces nappes soit adapté à remplir au moins complètement les empreintes 1. Il est préférable de remplir les empreintes avec un léger excès, l'excédent pouvant être essoré en cours ou en fin d'enroulement, soit par un ou plusieurs rouleaux appuyés sur le mandrin 5, soit par des moyens de fermeture de l'empreinte. Cette opération d'essorage peut, en plus de comprimer légèrement le matériau dans l'empreinte, présenter l'avantage de procurer une surface supérieure (coté convexe) plus lisse et de meilleur aspect.

La figure 5 illustre schématiquement l'opération de remplissage de la gorge constituée par la pluralité d'empreintes 1 selon la technique d'enroulement filamentaire. La technique d'enroulement filamentaire proprement dite est par exemple décrite dans les documents US-A-4904176, US-A-3966388, US-A-5151281 ou WO-A-88 07927. Selon la présente invention, le mandrin spécifique 5 est entraîné en rotation selon la direction de la flèche 14, procurant une traction contrôlée sur un ensemble 13 de fils ou nappes de renfort.

La forme convexe de la gorge du mandrin 5 est favorable à la régularité de la tension des fils de renfort dans ladite gorge. En effet, l'effet cabestan créé sur le mandrin est contrarié si la forme de la gorge possède des parties concaves.

La nature des fils de renfort et celle de la résine d'imprégnation peuvent être celles déjà connues, en particulier les matériaux décrits dans les documents précités.

La méthode d'imprégnation peut se faire par trempage, enduction ou préférentiellement selon la méthode décrite dans le document US-A-4932352.

On pourra utiliser des fils préimprégnés, par exemple selon le document US-A-5133995.

Il est souvent souhaitable de remplir les empreintes 1 par les fils de renfort par couches successives de fils ou de nappes, 15, 16, 17, 18, 19, ... Le nombre de nappes est déterminé en fonction de la surface de la section des empreintes 1. Le remplissage par couches successives facilite le contrôle de la régularité de la tension de fils dans la gorge. Ceci est une caractéristique prépondérante pour l'obtention après polymérisation d'une qualité mécanique optimale des produits obtenus par cette technique. Ainsi, malgré la forme convexe des empreintes disposées sur le mandrin, les fils ont tous sensiblement la même valeur de tension ce qui confère à la pièce une résistance optimale compte tenu de la quantité de fibres de renfort.

De plus, les inclusions d'air sont limitées puisque le risque qu'elles soient piégées est réduit. En effet, les bulles d'air ont tendance à s'évacuer plus aisément d'une nappe de faible épaisseur posée dans la gorge.

Cependant dans certains cas, il pourra être avantageux de regrouper l'ensemble 13 des nappes ou fils avant le point de pose dans la gorge. Pour cela, on peut faire passer l'ensemble 13 à travers un guide, par exemple du type entonnoir, ou un ensemble de rouleaux. On peut également remplir la gorge du mandrin de moulage à partir d'un ensemble de fibres et de résine qui sort d'une installation de pultrusion.

Sur la figure 5, la référence 20 représente une bande enroulée autour du mandrin 5 et plaquée sur la gorge constituée par la pluralité d'empreintes 1. Cette bande 20 est fixée sur le mandrin à l'extrémité de la gorge et est déroulée d'une bobine 21 de stockage par la rotation du mandrin, de la même manière que les nappes 13. Cette bande peut être fabriquée à partir de tout matériau fournissant une souplesse suffisante à la bande de façon à ce qu'elle puisse épouser la forme extérieure du mandrin sous une tension raisonnable. La face de la bande en contact avec la résine pourra être de préférence recouverte de produit évitant le collage avec la résine.

La bande 20 fait office de moyens de fermeture de la gorge. On ne sortira pas du cadre de cette invention si d'autres moyens de fermeture sont utilisés, par exemple des couvercles fixés sur chaque empreinte.

Une fois les empreintes entièrement remplies, on dépose le mandrin de la machine de bobinage et on place celui-ci dans des moyens de polymérisation de la résine afin d'obtenir la stabilisation de la résine des fibres enrobées. Avantageusement, le temps de stabilisation est ainsi indépendant de l'opération d'enroulement, donc peut être réglé principalement en fonction du type de résine, sans avoir à prendre en compte la vitesse de bobinage sur la machine de bobinage. Le choix du type de résine pourra être dirigé vers une résine beaucoup moins réactive, c'est-à-dire plus lente à stabiliser, mais de meilleure qualité mécanique.

De la même façon, l'opération de remplissage de la gorge par enroulement n'est plus directement dépendante du temps de stabilisation. La vitesse d'enroulement des fibres enrobées peut, par exemple, dépasser 10 mètres/minute, et dans le cas d'utilisation de fibres pré-imprégnées dépasser 30 mètres/minute.

Si l'on dispose d'un autre mandrin, on peut commencer une l'opération d'enroulement de celui-ci pendant le temps de polymérisation du premier mandrin.

Lorsque la polymérisation a atteint un état suffisant de stabilisation, on retire les moyens de fermeture de la gorge, s'ils existent, puis on extrait l'ensemble des pièces de la gorge. L'ensemble des pièces est alors sous forme d'un profilé sensiblement hélicoïdal. Les pièces sont ensuite séparées les unes des autres par sciage. Dans le cas où les sections de la gorge procurent une trop grande rigidité dudit profilé pour qu'il puisse être extrait dans son ensemble de la gorge, on peut détacher chaque pièce par sciage du profilé dans la gorge. Dans ce cas, des fentes adaptées doivent être prévues dans le moule à chaque extrémité 2 d'une empreinte 1.

La séquence d'opération de fabrication selon la présente invention permet d'optimiser les cadences de fabrication grâce à la grande souplesse de la méthode. De plus, les investissements en machines complexes ne sont pas nécessaires.

L'invention ne se limite pas à un mandrin comportant une seule gorge constituée par une pluralité de formes femelles 1, il est envisageable que pour des raisons d'agencement, le mandrin puisse comporter plusieurs gorges continues.

## Revendications

1. Méthode de fabrication de pièce en résine et fibres de renfort, ladite pièce comporte une dimension principale allongée et des sections perpendiculaires à ladite dimension principale ayant une surface sensiblement constante, caractérisée en ce qu'elle comporte les étapes suivantes :
- on fabrique des moyens de moulage (5) comportant une pluralité de formes femelles (1, 1a, 1b, 1c) correspondant à une empreinte d'une pièce,
- lesdites formes sont disposées les unes à la suite des autres sensiblement en hélice, de façon à ce que lesdites empreintes constituent une gorge sensiblement continue,
- on remplit ladite gorge par enroulement de fibres enrobées de résine polymérisable en entraînant en rotation lesdits moyens de moulage autour de l'axe (4) de l'hélice.

2. Méthode selon la revendication 1, caractérisée en ce qu'après remplissage de la gorge par enroulement, les moyens de moulage sont placés dans des moyens de polymérisation de la résine.

3. Méthode selon la revendication 1, caractérisée en ce que l'on place sur les moyens de moulage des moyens de fermeture de ladite gorge.

4. Méthode selon la revendication 3, caractérisée en ce que l'on enroule une bande de fermeture (20) sur ladite gorge, autour des moyens de moulage.

5. Méthode selon la revendication 1, caractérisée en ce que l'on remplit ladite gorge par couches successives de nappes (13) de fibres de renfort enrobées.

6. Dispositif de fabrication de pièce en résine et fibres de renfort, ladite pièce comporte une dimension principale allongée et des sections perpendiculaires à ladite dimension principale ayant une surface sensiblement constante, caractérisé en ce qu'il comporte des moyens de moulage comportant une pluralité de formes femelles correspondant à une empreinte d'une pièce, en ce que lesdites formes sont disposées les unes à la suite des autres sensiblement en hélice, de façon à ce que lesdites empreintes constituent une gorge sensiblement continue.

7. Dispositif selon la revendication 6, caractérisé en ce qu'il comporte des moyens de fermeture de la gorge.

8. Dispositif selon la revendication 7, caractérisé en ce que lesdits moyens de fermeture comportent une bande enroulée hélicoïdalement sur les moules.

9. Dispositif selon la revendication 6, caractérisé en ce que lesdits moyens de moulage comportent une pluralité de moules, chacun des moules comportant au moins une empreinte.

10. Dispositif selon la revendication 6, caractérisé en ce qu'il comporte des moyens de mise en rotation des moyens de moulage et des moyens de guidage des nappes de fibres enrobées.

## Claims

1. A method of manufacturing a part made from resin and reinforcing fibres, said part having a main, elongate direction and sections perpendicular to said main direction having a substantially constant surface area, characterised in that it consists of the following steps:
- moulding means (5) having a plurality of female forms (1, 1a, 1b, 1c) corresponding to an imprint of a part are made,
- said forms are arranged substantially helically one after the other so that said imprints form a substantially continuous groove,
- said groove is filled by winding fibres coated with a polymerisable resin by rotating said moulding means about the axis (4) of the helix.

2. A method as claimed in claim 1, characterised in that after filling the groove by winding, the moulding means are placed in means for polymerising the resin.

3. A method as claimed in claim 1, characterised in that means for closing the groove are placed on the moulding means.

4. A method as claimed in claim 3, characterised in that a closing strip (20) is wound onto said groove around the moulding means.

5. A method as claimed in claim 1, characterised in that said groove is filled with successive layers (13) of coated reinforcing fibres.

6. A device for manufacturing a part made from resin and reinforcing fibres, said part having a main, elongate dimension and sections perpendicular to said main dimension having a substantially constant surface area, characterised in that it has moulding means comprising a plurality of female forms corresponding to an imprint of a part, said forms being arranged substantially helically one after the other so that said imprints form a substantially continuous groove.

7. A device as claimed in claim 6, characterised in that it has means for closing off the groove.

8. A device as claimed in claim 7, characterised in that said closing means are a strip wound helically on the moulds.

9. A device as claimed in claim 6, characterised in that said moulding means have a plurality of moulds, each of the moulds having at least one imprint.

10. A device as claimed in claim 6, characterised in that it has means for rotating the moulding means and means for guiding the layers of coated fibres.

## Patentansprüche

1. Verfahren zum Herstellen von Werkteilen aus Harz und Verstärkungsfasern, wobei ein solches Teil eine längliche Hauptabmessung und Querschnitte senkrecht zu dieser Hauptabmessung mit einer im wesentlichen konstanten Fläche hat, dadurch gekennzeichnet, daß es die folgenden Stufen umfaßt:
- man stellt Formgebungsmittel (5) mit einer Vielzahl von negativen Formen (1, 1a, 1b, 1c) entsprechend einer Vertiefung eines (Werk-)Teils her,
- diese Formen sind aufeinanderfolgend im wesentlichen in Spiralgestalt derart angeordnet, daß diese Vertiefungen eine im wesentlichen kontinuierliche Nut bilden,
- und man füllt diese Nut durch Wickeln von mit polymerisierbarem Harz ummantelten Fasern, in dem man diese Formgebungsmittel um die Achse (4) der Spirale in Drehung versetzt.

2. Verfahren nach Anspruch 1, dadurch gekennzeichnet, daß nach dem Füllen der Nut durch Wickeln die Formgebungsmittel in Polymerisierungsmitteln für das Harz angeordnet sind.

3. Verfahren nach Anspruch 1, dadurch gekennzeichnet, daß man auf die Formgebungsmittel Mittel zum Schließen dieser Nut aufbringt.

4. Verfahren nach Anspruch 3, dadurch gekennzeichnet, daß man ein Schließband (20) auf diese Nut um die Formgebungsmittel herum wickelt.

5. Verfahren nach Anspruch 1, dadurch gekennzeichnet, daß man diese Nut mit aufeinanderfolgenden Schichten von Lagen (13) aus ummantelten Verstärungsfasern füllt.

6. Vorrichtung zur Herstellung eines (Werk-)Teils aus Harz und Verstärkungsfasern, wobei dieses Teil eine längliche Hauptabmessung und Querschnitte senkrecht zu dieser Hauptabmessung mit einer im wesentlichen konstanten Fläche umfaßt, dadurch gekennzeichnet, daß sie eine Vielzahl von negativen Formen umfassenden Formgebungsmitteln entsprechend einer Vertiefung eines Teils umfaßt, daß diese Formen aufeinanderfolgend gemäß einer Spirale derart angeordnet sind, daß diese Vertiefungen eine im wesentlichen kontinuierliche Nut bilden.

7. Vorrichtung nach Anspruch 6, dadurch gekennzeichnet, daß sie Mittel zum Schließen der Nut umfaßt.

8. Vorrichtung nach Anspruch 7, dadurch gekennzeichnet, daß diese Schließmittel ein spiralförmig auf diese Formen gewickeltes Band umfassen.

9. Vorrichtung nach Anspruch 6, dadurch gekennzeichnet, daß diese Formmittel eine Vielzahl von Formen umfassen, wobei jede der Formen wenigstens eine Vertiefung umfaßt.

10. Vorrichtung nach Anspruch 6, dadurch gekennzeichnet, daß sie Mittel zum In-Drehung-Versetzen der Formmittel und Mittel zum Führen der umhüllten Lagen umfaßt.
